# EUROPEAN PATENT SPECIFICATION

(11) **EP 2 628 690 B1**
(45) Date of publication and mention of the grant of the patent: **21.03.2018**
(21) Application number: 11832315.3
(22) Date of filing: 18.04.2011
(51) Int. Cl.: B65D 73/02, B65D 85/86, B32B 27/20, B32B 27/30, B32B 27/08

(54) **COVER FILM**
ABDECKFOLIE
FILM DE COUVERTURE

(30) Priority: 22.10.2010 JP 2010237436; 13.10.2010 JP 2010230907
(43) Date of publication of application: 21.08.2013
(73) Proprietor: Denka Company Limited, Tokyo 103-8338 (JP)
(72) Inventor: SASAKI, Akira, Isesaki-shi, Gunma 372-0855 (JP); TOKUNAGA, Hisatsugu, Isesaki-shi, Gunma 372-0855 (JP); FUJIMURA, Tetsuo, Isesaki-shi, Gunma 372-0855 (JP)
(74) Representative: Blodig, Wolfgang
(86) International application number: PCT/JP2011/059533
(87) International publication number: WO 2012/049873

(56) References cited:
- WO-A1-2010/018791
- JP-A- 9 267 450
- JP-A- 2000 280 411
- JP-A- 2002 283 512
- JP-A- 2003 246 358
- JP-A- 2007 331 783
- US-A1- 2004 005 465
- US-A1- 2006 199 005
- Mcas: "Evolue SP1540", , 1 December 2005 (2005-12-01), XP055283236, Retrieved from the Internet: URL:http://www.primepolymer.co.jp/evolue/e nglish/products/pdf/SP1540.pdf [retrieved on 2016-06-23]

## Description

### TECHNICAL FIELD

The present invention relates to a cover film used in packages for electronic components.

### BACKGROUND ART

With the miniaturization of electronic devices, the electronic components used therein have also become progressively smaller and of higher performance, and the components are automatically mounted on printed circuit boards during assembly of the electronic devices. Surface-mounted electronic components are housed in carrier tape with pockets that are consecutively formed by thermoforming in accordance with the shapes of the electronic components. After loading the electronic components, a cover film is laid as a lid material over the top surface of the carrier tape, and the ends of the cover film are continuously heat-sealed in the longitudinal direction with a heated seal bar to form packages. As the cover film material, one having a heat seal layer of thermoplastic resin laminated onto a biaxially stretched polyester film is used. The carrier tape is a thermoplastic resin, such as a polystyrene, a polycarbonate or a polyester.

In recent years, electronic components such as capacitors, resistors, IC's, LED's, connectors and switching elements have become increasingly smaller, lighter and thinner, and when peeling cover films to remove the electronic components contained inside from the packages, it has become increasingly difficult to achieve the desired performance on the two points indicated below, broadly divided. First, the variation in peel strength needed to peel the cover film from the carrier tape must be made small and stable, and second, static electricity generated when peeling the cover film must not cause the electronic components to stick to the heat seal layer of the cover film and cause mounting failures.

Regarding the desired performance, the reduced size and weight of the electronic components to be housed have made them more susceptible to problems during the mounting step, such as the electronic components spilling out due to vibrations during peeling, or being attracted and stuck to the cover film by static electricity.

On the other hand, electronic components are sometimes inspected for the absence of the components, orientation of the components, and damaged or bent leads while they are still housed in the package. With the miniaturization of electronic components, the inspection of components housed in packages requires that the cover films have high transparency.

With the purpose of responding to these desired properties, cover films capable of preventing the accumulation of electrostatic charge and suppressing adhesion of components while also having transparency due to the addition of conductive microparticles such as tin oxide and zinc oxide to the heat seal layer have been proposed (see Patent Documents 1 to 3). However, in the compositions described in Patent Documents 1 to 3, when peeling the cover films that have been heat-sealed to carrier tape, the heat seal layers having conductivity are transferred to the carrier tape surface, so that at the peeled heat seal portions, the outermost layer of the cover film is an intermediate layer not containing a conductive material or a primer layer not containing a conductive material. For this reason, the cover film can accumulate charge after peeling, making it difficult to obtain sufficient anti-adhesion effects with extremely small electronic components.

On the other hand, lid materials that suppress static electricity generated when peeling cover film from carrier tape by providing a static electricity dissipation layer having conductive microparticles or a surfactant added to a thermoplastic resin such as polyester resin, polyurethane resin, vinyl chloride-vinyl acetate copolymer resin and acrylic resin between an intermediate layer and a heat seal layer and peeling between the intermediate layer and the static electricity dissipation layer, causing cohesive failure of the static electricity dissipation layer, or causing interlayer peeling between the heat seal layer and the static electricity dissipation layer or cohesive failure of the static electricity dissipation layer, or causing interlayer peeling between the static electricity dissipation layer and the heat seal layer to suppress static electricity generated when peeling the cover film from the carrier tape have been proposed (see Patent Document 4). However, while Patent Document 4 considers the possibility of a cover film having good sealability with respect to carrier tape, methods for suppressing variations in the peel strength are not considered.

Additionally, a cover film capable of suppressing peeling static by providing an electrostatic induction prevention layer between the intermediate layer and the heat seal layer, and thereby reducing variations in peeled seal strength has been proposed (Patent Document 5). However, Patent Document 5 is not clear regarding the resins constituting the intermediate layer, electrostatic induction prevention layer and the sealant layer, and there is no discussion of peel strength variation.

Furthermore, a cover film comprising sequential layers of an intermediate layer bonded to a film substrate layer by an adhesive layer, a heat seal layer, and a static electricity dissipation layer has been proposed (Patent Document 6). However, even with this structure, peeling occurs between the intermediate layer and the heat seal layer, so problems similar to those for the compositions described in Patent Documents 1 to 3 remain.

As described above, conventional cover films sometimes are not capable of preventing mounting failures due to the generation of static electricity, and it is difficult to reduce variations in the peel strength enough to be able to handle the high-speed peeling of carrier tapes housing the latest lightweight and miniature electronic components.

Additionally, packages housing electronic components must be baked in order to remove water contained in the sealing resins. In order to raise the yield of such electronic components, the baking temperature must be raised to shorten the baking time, and in recent years, baking has been performed, for example, in a 60 °C environment for 72 hours or in an 80 °C environment for 24 hours with the cover film heat-sealed to the carrier tape. In such a case, the electronic components may adhere to the heat seal surface of the cover film and cause mounting failures when mounting the components on the substrate. However, such component adherence problems have conventionally not been sufficiently considered.

### RELATED ART

### Patent Documents

Patent Document 1: JP H8-258888 A
Patent Document 2: JP 2002-283512 A
Patent Document 3: JP 2006-232405 A
Patent Document 4 : JP H7-223674 A
Patent Document 5 : JP 2005-178073 A
Patent Document 6 : JP H9-216317 A

WO2010/018791 discloses a cover tape for packaging electronic components.

### SUMMARY OF THE INVENTION

The present invention was made in consideration of the above-described circumstances, and is mainly concerned with addressing the problem of offering a cover film wherein the difficulties of conventional cover films are at least partially solved.

More specifically, the present invention addresses the problem of offering a cover film to be used in combination with a carrier tape of polystyrene, polycarbonate, polyester or the like, wherein the variations in peel strength when peeling the cover film in order to take out electronic components is small, the cover film is not susceptible to breaking even during high-speed peeling, and static electricity generated during peeling is well-suppressed, so that the cover film can prevent problems during the mounting step, such as spillage and pickup failures of the electronic components due to vibrations and static electricity generated when peeling the cover film and adhesion of components due to baking, even when housing compact, lightweight electronic components in the carrier tape.

The present inventors performed diligent research into the above-described problems, as a result of which they discovered that a cover film that overcomes the problems addressed by the present invention can be obtained by providing a peel layer having a specific resin as a main component and comprising a conductive material between an intermediate layer and a heat seal layer having an acrylic resin as a main component, thereby achieving the present invention.

The present invention relates to the subject matter of claims 1 to 10. That is, according to one embodiment, the present invention offers a cover film comprising at least a substrate layer (A), an intermediate layer (B), a peel layer (C), and a heat seal layer (D) capable of heat-sealing a carrier tape; wherein the intermediate layer (B) comprises, as a main component, a linear low-density polyethylene with a tensile elasticity of 200 MPa or less, polymerized using a metallocene catalyst; and the peel layer (C) comprises a conductive material, and comprises, as a main component, a hydrogenated resin of an aromatic vinyl-conjugated diene copolymer with an aromatic vinyl group content of 15 to 35 mass%.

In the above, according to one embodiment, the hydrogenated resin of an aromatic vinyl-conjugated diene copolymer of peel layer (C) is a hydrogenated resin of a styrene-butadiene-styrene triblock copolymer or a styrene-isoprene-styrene triblock copolymer, and preferably has a density of 0.890 to 0.920 × 10³ (kg/m³) and/or a weight-average molecular weight of 50,000 to 150,000.

The thermoplastic resin of the heat seal layer (D) is preferably an acrylic resin, and in one embodiment, is an acrylic resin having a glass transition temperature of 45 to 80 °C, and in one example, 50 to 75 °C.

Furthermore, in another embodiment, the conductive material is conductive microparticles comprising microparticles that are acicular, spherical, or a combination thereof. For example, the conductive material may be a carbon nanomaterial, or acicular microparticles of antimony-doped tin oxide. The conductive material may also be contained in the heat seal layer (D). In the present invention, there is no limit on where the peeling occurs when peeling away the cover film heat-sealed to the carrier tape, and it may occur between the intermediate layer (D) and the peel layer (C), between the peel layer (C) and the heat seal layer (D), or between both; in one example, it occurs between the peel layer (C) and the heat seal layer (D).

In one embodiment, the surface resistivity of the peel layer (C) and/or the heat seal layer (D) is 1 × 10⁴ to 1 × 10¹² Ω. Furthermore, the present invention also includes electronic component packages using the above-described cover films as lid materials for carrier tapes having thermoplastic resins as their main components.

According to the present invention, the cover film is formed using respectively specific resins for the intermediate layer (B) and the peel layer (C), and a conductive material is contained in the peel layer (C), so when small and lightweight electronic components are housed in the carrier tape, problems will not occur during the mounting step such as the electronic components spilling out due to static electricity generated in the cover film when peeling. Additionally, according to one embodiment of the present invention, variations in the peel strength needed when peeling cover films for removing the electronic components can be reduced, high-speed peeling of carrier tape can be adequately handled, and adhesion of components due to baking can be prevented.

### BRIEF DESCRIPTION OF THE DRAWINGS

Fig. 1 is a section view showing an example of a layer structure of a cover film of the present invention.
Fig. 2 is a section view showing an example of a peeled form when peeling the cover film of the present invention from a carrier tape.
Fig. 3 is a schematic view showing a method of evaluating the breaking strength when peeling the cover film of the present invention from a carrier tape.

### MODES FOR CARRYING OUT THE INVENTION

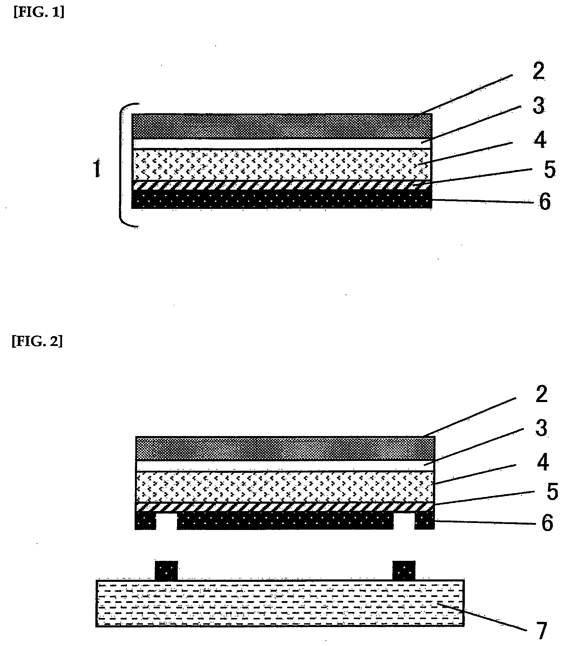

The cover film of the present invention comprises at least a substrate layer (A), an intermediate layer (B), a peel layer (C) and a heat seal layer (D) in that order. An example of the structure of the cover film of the present invention is shown in Fig. 1.

The substrate layer (A) is a layer comprising a biaxially stretched polyester or a biaxially stretched nylon, of which biaxially stretched polyethylene terephthalate (PET), biaxially stretched polyethylene naphthalate (PEN), biaxially stretched 6,6-nylon or 6-nylon and biaxially stretched polypropylene are particularly preferred. The biaxially stretched PET, biaxially stretched PEN, biaxially stretched 6,6-nylon, biaxially stretched 6-nylon or biaxially stretched polypropylene may be of types that are generally used, or be coated with or contain an anti-static agent for an anti-static treatment, or may be subjected to a corona treatment or an easy-adhesion treatment. If the substrate layer is too thin, the tensile strength of the cover film itself decreases, so "film breakage" tends to occur when peeling the cover film. On the other hand, if too thick, the heat sealability of the carrier tape decreases and the cost increases, so one of thickness 12 to 25 µm is normally preferred.

In the present invention, an intermediate layer (B) is laminated onto one surface of the substrate layer (A), by an adhesive layer if needed. The resin constituting the intermediate layer (B) is preferably a thermoplastic resin having flexibility and a suitable degree of rigidity, excelling in tear strength at standard temperature. Among these resins, linear low-density polyethylenes polymerized by a metallocene catalyst (hereinafter referred to as m-LLDPE) are chosen for having a narrowly controlled molecular weight distribution and a particularly high tear strength, and those having a tensile elasticity of 200 MPa or less computed from the change in tensile stress when taking measurements using a JIS K 6251 Type 1 dumbbell-shaped testing piece at a pulling rate of 100 mm/min in the direction of flow of the film when the amount of strain is 3% to 6% are particularly preferred. The intermediate layer (B) has the effect of reducing differences in iron pressure when a hot iron contacts the cover film during heat-sealing of a cover film to the carrier tape, and reducing variations in the peel strength when peeling the cover film by providing uniform adhesion between the substrate layer and the peel layer. However, when the tensile elasticity exceeds 200 MPa, the adhesion between the m-LLDPE constituting the intermediate layer and the hydrogenated aromatic vinyl-conjugated diene copolymer resin constituting the peel layer (C) becomes uneven causing variations in peel strength when peeling the cover film.

Additionally, when the tensile elasticity of the m-LLDPE constituting the intermediate layer (B) is less than 70 MPa, the adhesion of the intermediate layer (B) with the substrate layer (A) and the peel layer (C) will be uniform, but heat and pressure from the hot iron when heat sealing the cover film can cause the resin of the intermediate layer to be squeezed out from the ends of the cover film, and adhesion of the squeezed-out resin may cause heat sealing failures. Additionally, the intermediate layer is susceptible to deformation and is easily torn, as a result of which the cover film itself may be torn.

The above-described m-LLDPE is a copolymer having, as comonomers, an ethylene and an olefin with at least 3 carbon atoms, preferably a linear, branched or aromatic nucleus-substituted *α*-olefin with 3 to 18 carbon atoms. Examples of linear mono-olefins include propylene, 1-butene, 1-pentene, 1-hexene, 1-octene, 1-nonene, 1-decene, 1-dodecene, 1-tetradecene, 1-hexadecene and 1-octadecene. Additionally, examples of branched mono-olefins include 3-methyl-1-butene, 3-methyl-1-pentene, 4-methyl-1-pentene and 1-ethyl-1-hexene. Additionally, examples of aromatic nucleus-substituted mono-olefins include styrene and the like. These comonomers, alone or as a combination of two or more types, may be copolymerized with ethylene. The copolymerization may be a copolymerization of a polyene such as butadiene, isoprene, 1,3-hexadiene, dicyclopentadiene and 5-ethylidene-2-norbornene. Among these, those using 1-hexene and 1-octene as comonomers are preferably used for having a high tensile strength and excelling in terms of cost.

The thickness of the intermediate layer (B) is generally 5 to 50 µm, preferably 10 to 40 µm. If the thickness of the intermediate layer (B) is less than 5 µm, the adhesive strength between the substrate layer (A) and the intermediate layer (B) may be inadequate, and it is difficult to achieve the effect of reducing contact spots of the hot iron when heat sealing the cover film onto the carrier tape. On the other hand, if 50 µm is exceeded, the total thickness of the cover film may be too thick, and it may be difficult to obtain sufficient peel strength when heat sealing the cover film onto the carrier tape.

The cover film of the present invention has a peel layer (C) mainly composed of a thermoplastic resin provided between the intermediate layer (B) and the heat seal layer (D). The thermoplastic resin used in this peel layer (C) is a hydrogenated aromatic vinyl-conjugated diene copolymer resin having an aromatic vinyl group content of 15 to 35 mass%.

According to one example, the cover film of the present invention is peeled between the peel layer (C) and the heat seal layer (D). In that case, if the aromatic vinyl group content is less than 15 mass%, the adhesiveness with respect to the m-LLDPE constituting the intermediate layer (B) is good, but the adhesiveness to the heat seal layer (D) is insufficient, and the necessary peel strength for a cover film cannot be obtained. On the other hand, if the aromatic vinyl group content exceeds 35 mass%, changes in heat due to the hot iron used for the heat seal can cause the adhesiveness between the peel layer (C) and the heat seal layer (D) to suddenly change, making it difficult to obtain the desired peel strength, or causing variations in the peel strength when peeling the cover film.

Examples of the hydrogenated aromatic vinyl-conjugated diene copolymer resin constituting the peel layer (C) include hydrogenated styrene-conjugated diene block copolymer resins such as hydrogenated styrene-butadiene diblock copolymer resins, hydrogenated styrene-butadiene styrene triblock copolymer resins, hydrogenated styrene-isoprene diblock copolymer resins, hydrogenated styrene-isoprene-styrene triblock copolymer resins, hydrogenated styrene butadiene random copolymer resins and hydrogenated styrene-isoprene random copolymer resins. In particular, hydrogenated styrene-butadiene-styrene triblock copolymer resins and hydrogenated styrene-isoprene-styrene triblock copolymer resins are more preferably used. These hydrogenated triblock copolymer resins have stable adhesive force with respect to the heat seal layer (D), and the peel layer has a high tensile breaking strength, so the peel layer itself is not susceptible to destruction when the cover film is peeled from the carrier tape, as a result of which the peel layer (C) and the heat seal layer (D) can be stably peeled, reducing the variations in peel strength. The density of the hydrogenated aromatic vinyl-conjugated diene copolymer resin used in the peel layer (C) is within the range of 0.890 to 0.920 × 10³ (kg/m³), preferably 0.905 to 0.920 × 10³ (kg/m³). Additionally, the weight-average molecular weight is between 50,000 and 150,000, and outside these ranges of density and weight-average molecular weight, sufficient seal properties are difficult to obtain.

The thickness of the peel layer (C) is generally 0.1 to 3 µm, and preferably in the range of 0.1 to 1.5 µm. When the thickness of the peel layer (C) is less than 0.1 µm, there may not be enough peel strength when the cover film is heat-sealed to the carrier tape. On the other hand, if the thickness of the peel layer (C) exceeds 3 µm, there may be variations in the peel strength when peeling the cover film. As will be described below, the peel layer (C) and the heat seal layer (D) are usually formed by coating, and when formed by a coating process, the thickness indicated here is the thickness after drying.

The peel layer (C) comprises a conductive material, preferably conductive microparticles, such as to have a surface resistivity of preferably 1 × 10⁴ to 1 × 10¹² Ω. Examples of conductive microparticles include conductive tin oxide particles, conductive zinc oxide particles and conductive titanium oxide particles. Of these, antimony-, phosphorus-, or gallium-doped tin oxide exhibits high conductivity and does not greatly reduce the transparency, so it is favorably used. The conductive tin oxide particles, conductive zinc oxide particles or conductive titanium oxide particles may be spherical, acicular or a mixture thereof. In particular, when acicular antimony-doped tin oxide is used, a cover film having particularly good anti-static performance is obtained. The amount of conductive microparticles added with respect to 100 parts by mass of the thermoplastic resin constituting the peel layer (C) should be generally 100 to 1000 parts by mass, and more preferably 200 to 800 parts by mass. If the conductive microparticle content is less than 100 parts by mass, the surface resistivity on the heat seal layer (D) side of the cover film may not be able to be held below 10¹²Ω, and if it exceeds 1000 parts by mass, the relative amount of thermoplastic resin is reduced, so the peel strength due to the heat seal may not be sufficient, and the cost may become prohibitively high.

The peel layer (C) may contain one or more types of carbon nanomaterials such as carbon nanotubes or carbon nanofibers as conductive materials. Of these, carbon nanotubes having an aspect ratio of 10 to 10,000 are preferable. The amount of carbon nanomaterial added to the peel layer (C) should be 0.5 to 15 parts by mass, preferably 3 to 10 parts by mass with respect to 100 parts by mass of the thermoplastic resin constituting the layer. If the amount is less than 0.5 parts by mass, the conductivity effects achieved by addition of carbon nanomaterials may not be sufficient, while on the other hand, in excess of 15 parts by mass, not only may the cost be too high, but the transparency of the cover film may also be reduced, making it difficult to inspect the contained components through the cover film.

The cover film of the present invention has a heat seal layer (D) mainly composed of a thermoplastic resin formed on the surface of the peel layer (C). Examples of the thermoplastic resin of the heat seal layer (D) include acrylic resins, polyester resins, styrene resins and ethylene-vinyl acetate copolymer resins. Of these, acrylic resins have extremely good heat sealing ability with respect to the polystyrene, polycarbonate and polyester resins which are the materials constituting the carrier tape. In particular, a resin with a glass transition temperature of 45 to 80 °C is preferred, and more preferred is an acrylic resin of 50 to 75 °C. The acrylic resin constituting the heat seal layer (D) should be a resin comprising at least 50 mass% of at least one type of acrylic acid residue, examples of which include acrylic acid esters such as methyl acrylate, ethyl acrylate, propyl acrylate and butyl acrylate, methacrylic acid esters such as methyl methacrylate, ethyl methacrylate, propyl methacrylate, butyl methacrylate and cyclohexyl methacrylate, or a resin copolymerizing two or more types thereof.

The thickness of the heat seal layer (D) is preferably in the range of 0.1 to 5 µm, more preferably 0.1 to 3 µm, and even more preferably 0.1 to 1.5 µm. If the thickness of the heat seal is less than 0.1 µm, then the heat seal layer in the heat seal (D) may not have sufficient peel strength. On the other hand, if the thickness of the heat seal layer exceeds 5 µm, not only will the cost rise, but also, there may be variations in the peel strength when peeling the cover film.

Furthermore, in cover films according to preferred embodiments of the present invention, an inorganic filler may be added to the heat seal layer (D). The cover film of the present invention, as mentioned above, may be baked for 72 hours in a 60 °C environment or for 24 hours in an 80 °C environment while heat sealed to the surface of a carrier tape containing electronic components, in order to remove moisture contained in the sealing resin. In such a case, if the electronic components contained therein adhere to the cover film, there will be problems when peeling away the cover film to mount the electronic components. In the cover film of the present invention, there is little variation in the peel strength when peeling the cover film, and the adhesiveness of the heat seal layer (D) to the electronic components contained at high temperatures of 60 to 80 °C can be controlled, so such problems of adhesion of electronic components can be overcome, but if an inorganic filler is added to the heat seal layer (D), such adhesion can be more surely prevented. Here, the added inorganic filler may be of any type as long as it is capable of meaningfully achieving the adhesion prevention described above. Example include spherical or pulverized talc particles, silica particles, alumina particles, mica particles, calcium carbonate and magnesium carbonate. Additionally, in order to maintain the transparency of the cover film, the inorganic filler should have a median diameter (D50) of less than 200 nm, and should be contained at 10 to 50 parts by mass.

Furthermore, while the cover film of the present invention contains a conductive material in the peel layer (C), in one embodiment, the heat seal layer (D) may also contain a conductive material, so as to have a surface resistivity of preferably 1 × 10⁴ to 1 × 10¹² Ω. The types of conductive materials and amounts to be contained are the same as those mentioned above for the case where they are to be contained in the peel layer (C).

The method for producing the above-described cover film is not particularly restricted, and any common method may be used. For example, an adhesive of polyurethane, polyester, polyolefin or polyethyleneimine can be coated onto the surface of a substrate layer (A), for example, of biaxially stretched polyester, then a resin composition mainly composed of m-LLDPE to form an intermediate layer (B) can be extruded from a T-die, and coated onto a surface to which an anchor coating has been applied, to form a two-layer film consisting of a substrate layer (A) and an intermediate layer (B). Then, the surface of the intermediate layer (B) may be coated with the peel layer (C) of the present invention, for example, by coating with a gravure coater, a reverse coater, a kiss coater, an air knife coater, a Mayer bar coater or a dip coater. In that case, the surface of the intermediate layer (B) should preferably be subjected to a corona treatment or ozone treatment before coating, of which a corona treatment is particularly preferred. Further, the peel layer (C) coated with the intermediate layer (B) may be coated with a resin composition constituting the heat seal layer (D), for example, by coating with a gravure coater, a reverse coater, a kiss coater, an air knife coater, a Mayer bar coater or a dip coater, to obtain the objective cover film.

As another method, the intermediate layer (B) can be pre-formed by T-die casting or inflation, then dry-laminated onto the substrate layer (A) by adhesion using a polyurethane, polyester or polyolefin adhesive to obtain a film consisting of a substrate layer (A) and an intermediate layer (B), and the surface of the intermediately layer (B) coated with the peel layer (C) and the heat seal layer (D) to obtain the desired cover film.

As yet another method, the desired cover film can also be obtained by sand lamination. In other words, a film constituting a first intermediate layer is formed by T-die casting or inflation. Next, a resin composition mainly composed of melted m-LLDPE is supplied between a film of this first intermediate layer and a film of the substrate layer (A) to form and laminate a second intermediate layer, and after obtaining a film composed of the substrate layer (A) of the desired cover film and an intermediate layer (B) consisting of the first intermediate layer and the second intermediate layer, a peel layer (C) and a heat seal layer (D) are further coated onto the surface on the intermediate layer (B) side to obtain the objective film. As with the above methods, an adhesive should generally be coated onto the surface on the side of the substrate layer (A) to be laminated with film.

In addition to the aforementioned steps, at least one surface of the cover film may be subjected to an antistatic treatment as needed. As the antistatic agent, an anionic, cationic, non-ionic or betaine surfactant type antistatic agent, or a polymer type antistatic agent and a conductive material may be applied using a roll coater with a gravure roll, a lip coater or a sprayer. Additionally, in order to evenly apply the antistatic agent, the film surface should preferably be subjected to a corona discharge treatment or an ozone treatment, preferably a corona discharge treatment, before performing the antistatic treatment.

The cover film is used as a lid material for the carrier tape which is a receptacle for housing electronic components. Carrier tape is a strip-shaped material with a width of about 8 mm to 100 mm having dimples for housing electronic components. When heat sealing a cover film as a lid material, the material constituting the carrier tape is not particularly restricted, and any type that is commercially available may be used, such as polystyrene, polyester, polycarbonate or polyvinyl chloride. When using an acrylic resin in the heat seal layer, it can be suitably combined with polystyrene and polycarbonate carrier tapes. The carrier tape may be made conductive by mixing carbon black or carbon nanotubes into the resin, may have cationic, anionic or non-ionic surfactant type antistatic agents or long-lasting antistatic agents such as polyether ester amides mixed in, or have a surface coated with a coating having a surfactant type antistatic agent or a conductive material such as a polypyrrole or a polythiophene dispersed in an organic binder of acrylic or the like to provide an antistatic property.

A package housing electronic components can, for example, be formed by placing the electronic components in the dimples formed in a carrier tape for housing electronic components, then using the cover film as a lid material by continuously heat sealing both edges of the cover film in the longitudinal direction using a hot iron to package, and winding the result into a reel. By packaging the electronic components in this form, they can be stored and transported. The package of the present invention may be used for storage and transport of various electronic components such as connectors, IC's, diodes, transistors, capacitors, resistors and LED's, and can largely reduce problems when mounting the electronic components, particularly in the case of electronic components such as LED's, transistors and diodes having a thickness of 1 mm or less. The package housing the electronic components is advanced using holes called sprocket holes for conveying carrier tape provided in the longitudinal direction at the edges of the carrier tape while successively peeling away the cover film, verifying the presence, orientation and position of the electronic components, extracting them, and mounting them onto a substrate using a component mounting device.

Furthermore, when peeling away the cover film, if the peel strength is too low, it may come loose from the carrier tape and cause the housed components to spill out, and if too high, the cover film can become difficult to peel away from the carrier tape and become torn when peeling, so when heat sealed at 120 to 220 °C, it should have a peel strength of 0.05 to 1.0 N, preferably 0.1 to 0.7 N, and the variation in peel strength should preferably be less than 0.4 N, preferably 0.3 N.

### EXAMPLES

Herebelow, the present invention will be explained in detail by way of examples, but the present invention should not be interpreted as limited thereto.

### <Raw Materials Used>

In the Examples and Comparative Examples, the below-identified raw materials were used in the substrate layer (A), intermediate layer (B), peel layer (C) and heat seal layer (D). The tensile elasticity of the intermediate layer (B) was computed from the change in tensile stress when taking measurements using a JIS K 6251 Type 1 dumbbell-shaped testing piece at a pulling rate of 100 mm/min in the direction of flow of the film when the amount of strain was 3% to 6%.

### (Substrate Layer (A))

(a-1) Biaxially stretched polyethylene terephthalate film (Toyobo), thickness 12 µm (Intermediate Layer (B))
(b-1) m-LLDPE1: LL-UL (Futamura Chemical), thickness 40 µm, tensile elasticity 80 MPa, melting point 103 °C
(b-2) m-LLDPE2: LL-XUMN (Futamura Chemical), thickness 40 µm, tensile elasticity 125 MPa, melting point 116 °C
(b-3) m-LLDPE3: Kernel KF270 (Japan Polyethylene), thickness 40 µm, tensile elasticity 130 MPa, melting point 108 °C
(b-4) m-LLDPE4: Kernel KF271 (Japan Polyethylene), thickness 40 µm, tensile elasticity 190 MPa, melting point 102 °C
(b-5) m-LLDPE5: HR543 (KF Film), thickness 30 µm, tensile elasticity 206 MPa, melting point 123 °C
(b-6) m-LLDPE6: SE620M (Tamapoly), thickness 40 µm, tensile elasticity 255 MPa, melting point 127 °C
(b-7) m-LLDPE7: Kernel KF360T (Japan Polyethylene), thickness 40 µm, tensile elasticity 65 MPa, melting point 90 °C
(b-8) m-LLDPE8: UL-1 (Tamapoly), thickness 40 µm, tensile elasticity 150 MPa, melting point 108 °C

### (Resin of Peel Layer (C))

(c-1) Resin: Tuftec H1041 (Asahi Kasei Chemicals), hydrogenated styrene-butadiene-styrene triblock copolymer resin (SEBS), styrene proportion 30 mass%, density 0.914, weight average molecular weight 78,000
(c-2) Resin: Tuftec H1062 (Asahi Kasei Chemicals), hydrogenated styrene-butadiene-styrene triblock copolymer resin (SEBS), styrene proportion 18 mass%, density 0.890, weight average molecular weight 100,000
(c-3) Resin: Septon 2007 (Kuraray), hydrogenated styrene-isoprene-styrene triblock copolymer resin (SEPS), styrene proportion 30 mass%, density 0.914, weight average molecular weight 89,000
(c-4) Resin: Kraton G1651 (Kraton Polymers Japan), hydrogenated styrene-butadiene-styrene triblock copolymer resin (SEBS), styrene proportion 33 mass%, density 0.915, weight average molecular weight 100,000
(c-5) Resin: Tuftec H1051 (Asahi Kasei Chemicals), hydrogenated styrene-butadiene-styrene triblock copolymer resin (SEBS), styrene proportion 42 mass%, density 0.931, weight average molecular weight 85,000
(c-6) Resin: Tuftec H1221 (Asahi Kasei Chemicals), hydrogenated styrene-butadiene-styrene triblock copolymer resin (SEBS), styrene proportion 12 mass%, density 0.887, weight average molecular weight 100,000
(c-7) Resin: Septon 8007 (Kuraray), hydrogenated styrene-isoprene-styrene triblock copolymer resin (SEPS), styrene proportion 30 mass%, density 0.914, weight average molecular weight 90,000
(c-8) Resin: Tuftec H1052 (Asahi Kasei Chemicals), hydrogenated styrene-butadiene-styrene triblock copolymer resin (SEBS), styrene proportion 20 mass%, density 0.894, weight average molecular weight 85,000 (Conductive Material in Peel Layer (C))
(c-9) Conductive Material: FSS-10T (Ishihara Sangyo), acicular antimony-doped tin oxide, number-average length 2 µm, toluene dispersion type
(c-10) Conductive Material: SNS-10T (Ishihara Sangyo), spherical antimony-doped tin oxide, median diameter (D50) 100 nm, toluene dispersion type
(c-11) Conductive Material: DCNT-263D-1 (Daido Toryo), carbon nanotubes, diameter 10 to 20 nm, number average length 0.1 to 10 µm

### (Resin of Heat Seal Layer (D))

(d-1) Acrylic Resin 1: Dianal BR-113 (Mitsubishi Rayon), glass transition temperature 75 °C, weight average molecular weight 30,000
(d-2) Acrylic Resin 2: Dianal BR-116 (Mitsubishi Rayon), glass transition temperature 50 °C, weight average molecular weight 60,000 (Additives of Heat Seal Layer (D))
(d-3) Inorganic Filler: MEK-ST-ZL (Nissan Chemical Industries), 1-butanone solution of silica filler, solid part concentration 30 mass%, median diameter (D50) of silica filler 100 nm
(d-4) Conductive Material: FSS-10T (Ishihara Sangyo), acicular antimony-doped tin oxide, number-average length 2 µm, toluene dispersion type

### <Example 1>

The surface of a biaxially stretched polyester film of thickness 12 µm was coated with a polyester-type anchor coating by a gravure process, then a 40 µm thick film of [(b-1) m-LLDPE1] polymerized with a metallocene catalyst was laminated by dry lamination, to obtain a laminated film consisting of a biaxially stretched polyester layer and a m-LLDPE layer. The m-LLDPE surface of this film was subjected to a corona treatment, then [(c-1) resin] dissolved in cyclohexane and an antimony-doped tin oxide dispersion [(c-9) conductive material] were mixed at a solid ratio of (c-1) : (c-9) = 100 : 300 parts by mass, and coated onto the corona-treated surface to a dry thickness of 0.4 µm by a gravure process to form a peel layer. Furthermore, the [(d-1) acrylic resin] and the silica filler of (d-3) to form the heat seal layer were mixed at a solid mass ratio of (d-1) : (d-3) = 80 : 20, and the solution diluted with 1-butanone was coated onto the coated surface of the peel layer to a dry thickness of 1.2 µm by a gravure process to obtain a cover film having antistatic properties (the resins used in each layer are shown in Table 1).

### <Examples 2, 5-7 and 9; Comparative Examples 1-5>

Cover films were formed in the same manner as Example 1, aside from the fact that the intermediate layer, peel layer and heat seal layer were formed using the resins etc. described in Table 1, Table 2 and Table 3 as the raw materials.

### <Example 3>

A resin consisting of [(b-3) m-LLDPE3] polymerized by a metallocene catalyst was extruded from a T-die to obtain a film of thickness 40 µm. The surface of a 12 µm thick biaxially stretched polyester film was coated with a polyester type anchor coating by a gravure process, then a 40 µm thick film consisting of [(b-3) m-LLDPE3] obtained by prior extrusion was laminated by dry lamination to obtain a laminated film consisting of a biaxially stretched polyester layer and an m-LLDPE layer. The m-LLDPE surface of this film was subjected to a corona treatment, then [(c-1) resin] dissolved in cyclohexane and an antimony-doped tin oxide dispersion [(c-9) conductive material] were mixed at a solid ratio of (c-1) : (c-9) = 100 : 300 parts by mass, and coated onto the corona-treated surface to a dry thickness of 0.4 µm by a gravure process to form a peel layer. Furthermore, the [(d-1) acrylic resin] and the silica filler of (d-3) to form the heat seal layer were mixed at a solid mass ratio of (d-1) : (d-3) = 80 : 20, and the solution diluted with 1-butanone was coated onto the surface of the peel layer to a dry thickness of 1.2 µm by a gravure process to obtain a cover film having antistatic properties (the resins used in each layer are shown in Table 1).

### <Examples 4 and 8>

Cover films were produced in the same manner as Example 3, aside from the fact that the intermediate layer, peel layer and heat seal layer were formed using the resins etc. described in Table 1 and Table 2 as the raw materials.

### <Comparative Example 6>

The surface of a biaxially stretched polyester film of thickness 12 µm was coated with a polyester-type anchor coating by a gravure process, then a 40 µm thick film of [(b-2) m-LLDPE2] polymerized with a metallocene catalyst was laminated by dry lamination, to obtain a laminated film consisting of a biaxially stretched polyester layer and a m-LLDPE layer. The m-LLDPE surface of this film was subjected to a corona treatment, then [(c-1) resin] dissolved in cyclohexane was coated onto the corona-treated surface to a dry thickness of 0.4 µm by a gravure process to form a peel layer. Furthermore, 300 parts by mass of the (d-4) conductive material were added to the [(d-1) acrylic resin] and the silica filler of (d-3) to form the heat seal layer at a solid mass ratio of (d-1) : (d-3) = 80: 20 totaling 100 parts by mass, and the solution diluted with 1-butanone was coated onto the coated surface of the peel layer to a dry thickness of 1.2 µm by a gravure process to obtain a cover film having antistatic properties (the resins used in each layer are shown in Table 3).

### <Evaluation Test 1>

The below-described evaluations were performed on cover films for carrier tape of electronic components produced in Examples 1 to 9 and Comparative Examples 1 to 6. The results are shown together in Tables 1 to 3.

### (1) Variation in Peel Strength

A taping machine (Shibuya Kogyo ETM-480) was used to heat seal a 9.5 mm wide cover film to a 12 mm wide polycarbonate carrier tape (Denki Kagaku Kogyo) with the seal head width being 0.5 mm × 2, the seal head length being 32 mm, the seal pressure being 0.1 MPa, the delivery length being 4 mm and the sealing time being 0.1 seconds × 8 times, so as to have an average peel strength of 0.40 N. After letting stand for 24 hours in an atmosphere of temperature 23 °C and a relative humidity of 50%, the variation in peel strength (difference between the maximum value and the minimum value) was measured when peeling 100 mm of the cover film in the same atmosphere of temperature 23 °C and relative humidity 50% at a rate of 300 mm per minute and a peel angle of 170° to 180°. Those with a variation in peel strength of 0.2 N or less were rated "excellent", those in the range of 0.2 to 0.3 N were rated "good", and those exceeding 0.3 N were rated "poor". Those with an average peel strength of less than 0.4 N even when the temperature of the hot iron was 200 °C were marked "unrated".

### (2) Electrostatic Voltage when Peeling Cover Film

Using the conditions of (1) above, a heat seal was made on a polycarbonate carrier tape (Denki Kagaku Kogyo) so as to have a peel strength of 0.40 N. After peeling 50 mm of the cover film in an atmosphere of temperature 23 °C and a relative humidity of 50% under the same conditions as (1) above, a voltmeter (Monroe Electronics Isoprobe Electrostatic Voltmeter Model 279) was used to measure the electrostatic voltage. Additionally, those with an average peel strength of less than 0.4 N even when the temperature of the hot iron was 200 °C were marked "unrated".

### (3) Low Temperature Sealability

As with (1) above, a taping machine (Shibuya Kogyo ETM-480) was used to form a heat seal with the seal head width being 0.5 mm × 2, the seal head length being 32 mm, the seal pressure being 0.1 MPa, the delivery length being 4 mm and the sealing time being 0.1 seconds × 8 times. Those having an average peel strength of 0.40 N with a hot iron temperature of less than 160 °C were rated "excellent", those having an average peel strength of 0.40 N with a hot iron temperature of at least 160 °C and less than 200 °C were rated "good", and those having an average peel strength of 0.40 N with a hot iron temperature of 200 °C or more were rated "poor".

### (4) Change in Peel Strength Over Time

A heat seal was made on a polycarbonate carrier tape under the same conditions as (1) above so as to have an average peel strength of 0.40 N. After letting the heat sealed product stand for 7 days in a 60 °C environment, the peel strength was measured under the same conditions as (1) above. Those having an average peel strength of at least 0.30 N were rated "excellent", those having an average peel strength in the range of 0.20 to 0.30 N were rated "good", and those not reaching an average peel strength of 0.40 N and therefore not capable of being evaluated were marked "unrated".

### (5) Surface Resistivity

The surface resistivity of the surface of the heat seal layer of a cover film was measured using a Mitsubishi Chemical Hiresta UP MCP-HT450 with an applied voltage of 10 V in an atmosphere of temperature 23 °C and a relative humidity of 50% by the method of JIS K6911. The results are shown in the surface resistivity columns in Tables 1 to 3. In the tables, the numbers after "E" represent the number of digits in the index, so for example, "5.6E+08" means 5.6 × 10⁸.

### (6) Breaking Strength

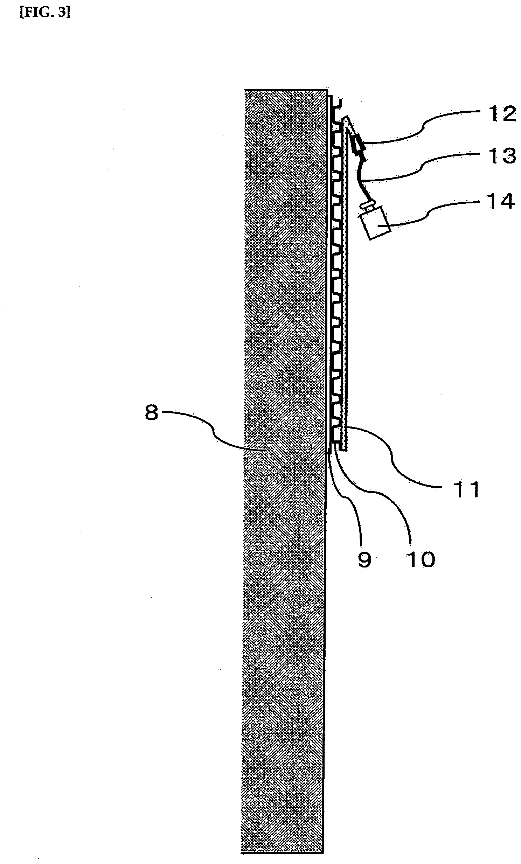

Under the same conditions as (1) above, a heat seal was made with respect to a polycarbonate carrier tape so as to have an average peel strength of 0.50 N. A double-sided adhesive tape was affixed to the bottom surface of carrier tape sufficient for 500 mm of heat sealed product, which was then affixed to a vertical wall. As shown in Fig. 3, 50 mm of the cover film was peeled, a 1 kg weight was attached and dropped, and the cover film was inspected for the presence or absence of breakage. The number of test points was 10 points. Those that were not able to be evaluated due to not being able to obtain a heat seal of average peel strength 0.40 N were marked "unrated".

**[Table 1]**

| | Resin Type | | | | | Ex. 1 | Ex. 2 | Ex. 3 | Ex. 4 | Ex. 5 | Ex. 6 |
|---|---|---|---|---|---|---|---|---|---|---|---|
| Intermediate Layer | | | | Thickness (µm) | Tensile Elasticity (MPa) | | | | | | |
| | m-LLDPE | b-1 | LL-UL | 40 | 80 | 100 | | | | | |
| | m-LLDPE | b-2 | LL-XUMN | 40 | 125 | | 100 | | | 100 | 100 |
| | m-LLDPE | b-3 | Kernel KF270 | 40 | 130 | | | 100 | | | |
| | m-LLDPE | b-4 | Kernel KF271 | 40 | 190 | | | | 100 | | |
| Peel Layer | | | | Styrene (mass%) | | | | | | | |
| | SEBS | c-1 | Tuftec H1041 | 30 | | 100 | 100 | 100 | 100 | | |
| | SEBS | c-2 | Tuftec H1062 | 18 | | | | | | 100 | |
| | SEPS | c-3 | Septon 2007 | 30 | | | | | | | 100 |
| | SEBS | c-4 | Kraton G1651 | 33 | | | | | | | |
| | Conductor | c-9 | FSS-10T | | | 300 | 300 | 300 | 300 | 300 | 300 |
| Heat Seal Layer | | | | | | | | | | | |
| | Acrylic Resin | d-1 | Dianal BR-113 | | | 80 | 80 | 80 | 80 | 80 | 80 |
| | Inorganic Filler | d-2 | MEK-ST-ZL | | | 20 | 20 | 20 | 20 | 20 | 20 |
| Evaluated Properties | Substrate layer thickness | | | : µm | | 12 | 12 | 12 | 12 | 12 | 12 |
| | Intermediate layer thickness | | | : µm | | 40 | 40 | 40 | 40 | 40 | 40 |
| | Peel layer thickness | | | : µm | | 0.4 | 0.4 | 0.4 | 0.4 | 0.4 | 0.4 |
| | Heat seal layer thickness | | | : µm | | 1.2 | 1.2 | 1.2 | 1.2 | 1.2 | 1.2 |
| | Cover film thickness | | | : µm | | 53.6 | 53.6 | 53.6 | 53.6 | 53.6 | 53.6 |
| | (1) Peel strength variation | | | | | excel | excel | excel | excel | excel | excel |
| | (2) Electrostatic voltage peeling cover film | | | : V | | 0 | 0 | 0 | 0 | 0 | 0 |
| | (3) Low temperature sealability | | | | | excel | excel | excel | excel | excel | excel |
| | (4) Peel strength change over time | | | | | excel | excel | excel | excel | excel | excel |
| | (5) Surface resistivity | | | : Ω | | 5.6E+08 | 4.9E+08 | 2.8E+08 | 6.0E+08 | 3.8E+08 | 5.9E+08 |
| | (6) Braking strength | | | : per 10 points | | 0 | 0 | 0 | 0 | 0 | 0 |

**[Table 2]**

| | Resin Type | | | | | Ex. 7 | Ex. 8 | Ex. 9 |
|---|---|---|---|---|---|---|---|---|
| Intermediate Layer | | | | Thickness (µm) | Tensile Elasticity (MPa) | | | |
| | m-LLDPE | b-1 | LL-UL | 40 | 80 | | | 100 |
| | m-LLDPE | b-2 | LL-XUMN | 40 | 125 | 100 | | |
| | m-LLDPE | b-7 | Kernel KF360 | 40 | 65 | | 100 | |
| Peel Layer | | | | Styrene (mass%) | | | | |
| | SEBS | c-1 | Tuftec H1041 | 30 | | | 100 | 100 |
| | SEBS | c-4 | Kraton G1651 | 30 | | 100 | | |
| | Conductor | c-9 | FSS-10T | | | 300 | 300 | |
| | | c-11 | DCNT-263D-1 | | | | | 10 |
| Heat Seal Layer | | | | | | | | |
| | Acrylic Resin | d-1 | Dianal BR-113 | | | 80 | 80 | 80 |
| | Inorganic Filler | d-2 | MEK-ST-ZL | | | 20 | 20 | 20 |
| Evaluated Properties | Substrate layer thickness | | | : µm | | 12 | 12 | 12 |
| | Intermediate layer thickness | | | : µm | | 40 | 40 | 40 |
| | Peel layer thickness | | | : µm | | 0.4 | 0.4 | 0.4 |
| | Heat seal layer thickness | | | : µm | | 1.2 | 1.2 | 1.2 |
| | Cover film thickness | | | : µm | | 53.6 | 53.6 | 53.6 |
| | (1) Peel strength variation | | | | | excel | excel | excel |
| | (2) Electrostatic voltage peeling cover film : | | | V | | 0 | 0 | 0 |
| | (3) Low temperature sealability | | | | | excel | excel | excel |
| | (4) Peel strength change over time | | | | | excel | excel | excel |
| | (5) Surface resistivity | | | : Ω | | 7.9E+08 | 3.4E+08 | 3.7E+09 |
| | (6) Braking strength | | | per 10 points | | 0 | 3 | 0 |

**[Table 3]**

| | Resin Type | | | | | Co. Ex. 1 | Co. Ex. 2 | Co. Ex. 3 | Co. Ex. 4 | Co. Ex. 5 | Co. Ex. 6 |
|---|---|---|---|---|---|---|---|---|---|---|---|
| Intermediate Layer | | | | Thickness (µm) | Tens Elast (MPa) | | | | | | |
| | m-LLDPE | b-2 | LL-XUMN | 40 | 125 | 100 | 100 | | | 100 | 100 |
| | m-LLDPE | b-5 | HR543 | 30 | 206 | | | 100 | | | |
| | m-LLDPE | b-6 | SE620M | 40 | 255 | | | | 100 | | |
| Peel Layer | | | | Styrene (mass%) | | | | | | | |
| | SEBS | c-1 | Tuftec H1041 | 30 | | | | | 100 | 100 | 100 |
| | SEPS | c-3 | Septon 2007 | 30 | | | | 100 | | | |
| | SEBS | c-5 | Tuftec H1051 | 42 | | 100 | | | | | |
| | SEBS | c-6 | Tuftec H1221 | 12 | | | 100 | | | | |
| | Conductor | c-9 | FSS-10T | | | 300 | 300 | 300 | 300 | 0 | 0 |
| Heat Seal Layer | | | | Glass Trans (°C) | Wt. Avg. Mol. Wt. | | | | | | |
| | Acrylic Resin | d-1 | Dianal BR-113 | 75 °C | 3000 | 80 | 80 | 80 | 80 | 80 | 80 |
| | Inorganic Filler | d-2 | MEK-ST-ZL | | | 20 | 20 | 20 | 20 | 20 | 20 |
| | Conductive Filler | d-3 | FSS-10T | | | | | | | | 300 |
| Evaluated Properties | Substrate layer thickness | | | : µm | | 12 | 12 | 12 | 12 | 12 | 12 |
| | Intermediate layer thickness | | | : µm | | 40 | 40 | 30 | 40 | 40 | 40 |
| | Peel layer thickness | | | : µm | | 0.4 | 0.4 | 0.4 | 0.4 | 0.4 | 0.4 |
| | Heat seal layer thickness | | | : µm | | 1.2 | 1.2 | 1.2 | 1.2 | 1.2 | 1.2 |
| | Cover film thickness | | | : µm | | 53.6 | 53.6 | 43.6 | 53.6 | 53.6 | 53.6 |
| | (1) Peel strength variation | | | | | poor | unrated | poor | poor | excel | excel |
| | (2) Electrostatic voltage peeling cover film | | | : V | | 0 | unrated | 0 | 0 | 124 | 138 |
| | (3) Low temperature sealability | | | | | good | poor | good | poor | excel | excel |
| | (4) Peel strength change over time | | | | | good | unrated | good | good | excel | excel |
| | (5) Surface resistivity | | | : Ω | | 7.2E+08 | 6.9E+08 | 8.4E+08 | 5.4E+08 | >1.0E12 | 5.3E+07 |
| | (6) Breaking strength | | | : per 10 points | | 0 | unrated | 0 | 0 | 0 | 0 |

### <Example 10>

The surface of a biaxially stretched polyester film of thickness 12 µm was coated with a polyester-type anchor coating by a gravure process, then a 40 µm thick film of [m-LLDPE1] polymerized with a metallocene catalyst was laminated by dry lamination, to obtain a laminated film consisting of a biaxially stretched polyester layer and a m-LLDPE layer. The m-LLDPE surface of this film was subjected to a corona treatment, then [(c-1) resin] dissolved in cyclohexane and an antimony-doped tin oxide dispersion [(c-9) conductive material] were mixed at a solid ratio of (c-1) : (c-9) = 100 : 300 parts by mass, and coated onto the corona-treated surface to a dry thickness of 0.4 µm by a gravure process to form a peel layer. Furthermore, a solution obtained by mixing the [(d-1) acrylic resin] and [(d-3) inorganic filler] at a solid mass ratio of (d-1) : (d-3) = 100 : 50 and dissolving in MEK was coated as a heat seal layer onto the surface of the peel layer to a dry thickness of 1.0 µm by a gravure process to obtain a cover film for carrier tape having antistatic properties.

### <Examples 11 to 16 and Comparative Examples 8 to 10>

Cover films were formed in the same manner as Example 10, aside from the fact that the intermediate layer, peel layer and heat seal layer were formed using the resins etc. described in Table 4 and Table 5 as the raw materials.

### <Comparative Example 7>

A cover film was produced in the same manner as Example 10, except that no intermediate layer was provided, and the peel layer and heat seal layer were sequentially formed on a substrate layer of thickness 50 µm.

### <Comparative Example 11>

A cover film was produced in the same manner as Example 10, except that a conductive material was not added to the peel layer, and was added to the heat seal layer.

### <Comparative Example 12>

A cover film was produced in the same manner as Example 10, except that no peel layer was provided, and the intermediate layer and heat seal layer were formed using the resins etc. described in Table 5 as the raw materials.

### <Comparative Example 13>

A cover film was produced in the same manner as Example 10, except that no heat seal layer was provided, and the intermediate layer and peel layer were formed using the resins etc. described in Table 5 as the raw materials.

### <Evaluation Test 2>

The below-described evaluations were performed on cover films for carrier tape of electronic components produced in Examples 10 to 16 and Comparative Examples 7 to 13. The results are shown together in Tables 4 and 5.

### (1) Haze

The haze was measured using an integrating sphere type measuring device in accordance with measuring method A of JIS K 7105:1998. Those for which the film forming properties were extremely poor and a film was not able to be obtained so the haze could not be evaluated were marked "unrated". The results are shown in the haze columns of Tables 4 and 5.

### (2) Sealability

A taping machine (Shibuya Kogyo ETM-480) was used to heat seal a 5.5 mm wide cover film to an 8 mm wide polycarbonate carrier tape (Denki Kagaku Kogyo) and a polystyrene carrier tape (Denki Kagaku Kogyo) with the seal head width being 0.5 mm × 2, the seal head length being 32 mm, the seal pressure being 0.1 MPa, the delivery length being 4 mm and the sealing time being 0.1 seconds × 8 times, at sealing iron temperatures from 140 °C to 190 °C at 10 °C intervals. After letting stand for 24 hours in an atmosphere of temperature 23 °C and a relative humidity of 50%, the cover film was peeled in the same atmosphere of temperature 23 °C and relative humidity 50% at a rate of 300 mm per minute and a peel angle of 170° to 180°. Those with an average peel strength in the range of 0.3 to 0.9 N when heat sealing with sealing iron temperatures from 140 °C to 190 °C at 10 °C intervals were rated "excellent", those with a sealing iron temperature range in which the average peel strength was in the range of 0.3 to 0.9 N but having an average peel strength outside the range of 0.3 to 0.9 N when heat sealing with sealing iron temperatures from 140 °C to 190 °C at 10 °C intervals were rated "good", and those in which the average peel strength did not enter the range of 0.3 to 0.9 N at any sealing iron temperature were rated "poor". The results are shown in the sealability columns in Table 4 and Table 5.

### (3) Variation in Peel Strength

A polystyrene carrier tape (Denki Kagaku Kogyo) was heat sealed so as to have a peel strength of 0.4 N. The cover film was peeled under the same conditions as for (2) Sealability above. The variation in peel strength was derived from the chart obtained when peeling 100 mm of cover film in the peel direction. Those with a variation in peel strength of 0.2 N or less were rated "excellent", those with a variation of 0.2 to 0.4 N were rated "good", those with a variation greater than 0.4 N were rated "poor" and those in which the peel strength did not reach 0.4 N were marked "unrated". The results are shown in the variation in peel strength columns in Table 4 and Table 5.

### (4) Electrostatic Voltage when Peeling Cover Film

A polystyrene carrier tape (Denki Kagaku Kogyo) was heat sealed so as to have a peel strength of 0.4 N. After peeling the cover film under the same conditions as for (2) Sealability above, a voltmeter (Monroe Electronics Isoprobe Electrostatic Voltmeter Model 279) was used to measure the voltage on the heat seal surface of the cover film. Additionally, those in which the peel strength did not reach 0.4 N were marked "unrated". The results are shown in the electrostatic voltage when peeling cover film columns in Table 4 and Table 5.

### (5) Component Adhesion Test

Ten electronic components of width 1.0 mm × length 0.6 mm × depth 0.5 mm were loaded into 8 mm wide conductive polycarbonate carrier tape (Denki Kagaku Kogyo), then the cover film was heat sealed. After vibrating for 5 minutes at 600 rpm (3000 times) with the cover film side down, the cover film was peeled, and a component adhesion evaluation was performed on the cover film. Those in which not one electronic component adhered to the cover film were rated excellent, those in which an average of one adhered were rated good, and those in which two or more attached were rated poor. The results are shown in the component adhesion test columns of Table 4 and Table 5.

### (6) Surface Resistivity

This was measured by the same method as for Evaluation Test 1.

**[Table 4]**

| | | | | Ex. 10 | Ex. 11 | Ex. 12 | Ex. 13 | Ex. 14 | Ex. 15 | Ex. 16 |
|---|---|---|---|---|---|---|---|---|---|---|
| Intermediate Layer | m-LLDPE | b-1 | LL-UL | 100 | 100 | 100 | 100 | 100 | | |
| | m-LLDPE | b-2 | LL-XUMN | | | | | | 100 | |
| | m-LLDPE | b-8 | UL-1 | | | | | | | 100 |
| | Resin | c-1 | Tuftec H1041 | 100 | 100 | 100 | | | 100 | 100 |
| | Resin | c-7 | Septon 8007 | | | | 100 | | | |
| | Resin | c-8 | Tuftec H1052 | | | | | 100 | | |
| Peel Layer Blend | Resin | c-6 | Tuftec H1221 | | | | | | | |
| | Resin | c-5 | Tuftec H1051 | | | | | | | |
| | Conductor | c-9 | FSS-10T | 300 | | | 300 | 300 | 300 | 300 |
| | Conductor | c-10 | SNS-10T | | 800 | | | | | |
| | Conductor | c-11 | DCNT-263D-1 | | | 15 | | | | |
| Heat Seal Layer Blend | Acrylic Resin | d-1 | Dianal BR-113 | 100 | 100 | 100 | | | 100 | |
| | Acrylic Resin | d-2 | Dianal BR-116 | | | | 100 | 100 | | 100 |
| | Inorganic Filler | d-3 | MEK-ST-ZL | 50 | 50 | 60 | | 20 | 80 | 10 |
| | Substrate layer thickness; µm | | | 12 | 12 | 12 | 12 | 12 | 12 | 12 |
| | Intermediate layer thickness; µm | | | 40 | 40 | 40 | 40 | 40 | 40 | 40 |
| | Peel layer thickness; µm | | | 0.4 | 0.3 | 0.6 | 0.4 | 0.8 | 0.4 | 0.4 |
| | Heat seal layer thickness; µm | | | 1 | 1.5 | 1 | 1 | 2 | 1 | 1 |
| | Cover film thickness; µm | | | 53.4 | 53.8 | 53.6 | 53.4 | 54.8 | 53.4 | 53.4 |
| Evaluated Properties etc. | (1) Haze; % | | | 10 | 30 | 10 | 9 | 9 | 10 | 10 |
| | (2) Sealability | 1 | to polycarbonate carrier tape | excel | excel | excel | excel | excel | excel | excel |
| | | 2 | to polystyrene carrier tape | excel | excel | excel | excel | good | excel | excel |
| | (3) Peel strength variation | | | excel | excel | excel | excel | good | excel | excel |
| | (4) Electrostatic voltage when peeling cover film; V | | | 0 | 0 | 1 | 0 | 0 | 0 | 0 |
| | (5) Component adhesion test | | | excel | excel | excel | excel | excel | excel | excel |
| | (6) Surface resistivity; Ω | | | 1.E+08 | 2.E+08 | 5.E+08 | 1.E+08 | 1.E+07 | 1.E+08 | 1.E+08 |

**[Table 5]**

| | | | | Co. Ex. 7 | Co. Ex. 8 | Co. Ex. 9 | Co. Ex. 10 | Co. Ex. 11 | Co. Ex. 12 | Co. Ex. 13 |
|---|---|---|---|---|---|---|---|---|---|---|
| Intermediate Layer | m-LLDPE | b-1 | LL-UL | | 100 | 100 | 100 | 100 | 100 | 100 |
| | m-LLDPE | b-2 | LL-XUMN | | | | | | | |
| | m-LLDPE | b-8 | UL-1 | | | | | | | |
| | Resin | c-1 | Tuftec H1041 | 100 | 100 | | | 100 | | 100 |
| | Resin | c-7 | Septon 8007 | | | | | | | |
| | Resin | c-8 | Tuftec H1052 | | | | | | | |
| Peel Layer Blend | Resin | c-6 | Tuftec H1221 | | | 100 | | | | |
| | Resin | c-5 | Tuftec H1051 | | | | 100 | | | |
| | Conductor | c-9 | FSS-10T | 300 | | | 300 | | | |
| | Conductor | c-10 | SNS-10T | | | 800 | | | | |
| | Conductor | c-11 | DCNT-263D-1 | | | | | | | |
| | Acrylic Resin | d-1 | Dianal BR-113 | 100 | 100 | 100 | 100 | 100 | | |
| Heat Seal Layer Blend | Acrylic Resin | d-2 | Dianal BR-116 | | | | | | 100 | |
| | Inorganic Filler | d-3 | MEK-ST-ZL | 50 | 50 | 50 | 50 | | | |
| | Conductor | d-4 | FSS-10T | | | | | 300 | | |
| | Substrate layer thickness; µm | | | 50 | 12 | 12 | 12 | 12 | 12 | 12 |
| | Intermediate layer thickness; µm | | | 0 | 40 | 40 | 40 | 40 | 40 | 40 |
| | Peel layer thickness; µm | | | 0.8 | 1 | 1 | 1 | 1 | 0 | 1.5 |
| | Heat seal layer thickness; µm | | | 1 | 1 | 1 | 1 | 1 | 1 | 0 |
| | Cover film thickness; µm | | | 51.8 | 54 | 54 | 54 | 54 | 53 | 53.5 |
| Evaluated Properties etc. | (1) Haze; % | | | 8 | 9 | 25 | 10 | 15 | 6 | 11 |
| | (2) Sealability | 1 | polycarbonate carrier tape | poor | good | poor | poor | excel | poor | poor |
| | | 2 | polystyrene carrier tape | poor | good | good | poor | excel | poor | excel |
| | (3) Peel strength variation | | | unrated | excel | good | unrated | excel | unrated | excel |
| | (4) Electrostatic voltage when peeling cover film; V | | | unrated | 200 | 0 | 0 | 90 | 250 | 130 |
| | (5) Component adhesion test | | | excel | poor | excel | excel | poor | poor | poor |
| | (6) Surface resistivity; Ω | | | I.E+08 | >1.E+14 | 2.E+08 | 1.E+08 | 3.E+07 | >1.E+14 | >1.E+14 |

### DESCRIPTION OF THE REFERENCE NUMBERS

- 1: cover film
- 2: substrate layer (A)
- 3: anchor coat layer
- 4: intermediate layer (B)
- 5: peel layer (C)
- 6: heat seal layer (D)
- 7: carrier tape
- 8: wall
- 9: double-sided adhesive tape
- 10: carrier tape
- 11: cover film
- 12: clip
- 13: string
- 14: weight

## Claims

1. A cover film comprising at least a substrate layer (A), an intermediate layer (B), a peel layer (C), and a heat seal layer (D) capable of heat-sealing a carrier tape; wherein
the substrate layer (A) is a layer comprising a biaxially stretched polyester or a biaxially stretched nylon;
the intermediate layer (B) comprises, as a main component, a linear low-density polyethylene with a tensile elasticity of 200 MPa or less, polymerized using a metallocene catalyst;
the intermediate layer (B) is laminated onto one surface of the substrate layer (A); and
the heat seal layer (D) is formed on the surface of the peel layer (C), **characterized in that**
the peel layer (C) comprises a conductive material, and comprises, as a main component, a hydrogenated resin of an aromatic vinyl-conjugated diene copolymer with an aromatic vinyl group content of 15 to 35 mass%.

2. The cover film of claim 1, wherein the hydrogenated resin of an aromatic vinyl-conjugated diene copolymer of peel layer (C) is a resin with a density of 0.890 to 0.920 × 10³ (kg/m3) and a weight-average molecular weight of 50,000 to 150,000.

3. The cover film of claim 1 or 2, wherein the heat seal layer (D) comprises an acrylic resin as a main component.

4. The cover film of any one of claims 1 to 3, wherein the conductive material is conductive microparticles comprising microparticles that are acicular, spherical, or a combination thereof.

5. The cover film of any one of claims 1 to 4, wherein the conductive material is a carbon nanomaterial.

6. The cover film of any one of claims 1 to 4, wherein the conductive material is acicular microparticles of antimony-doped tin oxide.

7. The cover film of any one of claims 1 to 6, wherein the heat seal layer (D) further comprises a conductive material.

8. The cover film of any one of claims 1 to 7, wherein peeling occurs between the peel layer (C) and the heat seal layer (D) when peeling away the cover film heat-sealed to the carrier tape.

9. The cover film of any one of claims 1 to 8, wherein the surface resistivity of the peel layer (C) and/or the heat seal layer (D) is 1 × 10⁴ to 1 × 10¹² Ω.

10. An electronic component package using the cover film of any one of claims 1 to 9 as a lid material for carrier tape having a thermoplastic resin as a main component.

## Patentansprüche

1. Abdeckfolie, umfassend wenigstens eine Substratschicht (A), eine Zwischenschicht (B), eine Abziehschicht (C) und eine Heißsiegelschicht (D), die ein Trägerband verschweißen kann, wobei
die Substratschicht (A) eine Schicht ist, die ein biaxial gestrecktes Polyester oder ein biaxial gestrecktes Nylon umfasst;
die Zwischenschicht (B) als Hauptbestandteil ein lineares Polyethylen geringer Dichte mit einer Zugelastizität von 200 MPa oder weniger umfasst, das unter Verwenden eines Metallocen-Katalysators polymerisiert wurde;
die Zwischenschicht (B) auf eine Oberfläche der Substratschicht (A) laminiert ist; und
die Heißsiegelschicht (D) auf einer Oberfläche der Abziehschicht (C) gebildet ist,
**dadurch gekennzeichnet, dass**
die Abziehschicht (C) ein leitfähiges Material umfasst und, als Hauptbestandteil, ein hydriertes Harz eines mit einem aromatischen Vinyl konjugierten Dien-Copolymers mit einem Gehalt an aromatischen Vinylgruppen von 15 bis 35 Massenprozent, umfasst.

2. Abdeckfolie nach Anspruch 1, wobei das hydrierte Harz des mit einem aromatischen Vinyl konjugierten Dien-Copolymers der Abziehschicht (C) ein Harz mit einer Dichte von 0,890 bis 0,920 x 10³ (kg/m3) und einem gewichtsgemittelten Molekulargewicht von 50.000 bis 150.000 ist.

3. Abdeckfolie nach Anspruch 1 oder 2, wobei die Heißsiegelschicht (D) ein Acrylharz als Hauptbestandteil umfasst.

4. Abdeckfolie nach einem der Ansprüche 1 bis 3, wobei das leitfähige Material leitfähige Mikropartikel sind, die Mikropartikel umfassen, die nadelförmig, kreisförmig oder eine Kombination davon sind.

5. Abdeckfolie nach einem der Ansprüche 1 bis 4, wobei das leitfähige Material ein Kohlenstoff-Nanomaterial ist.

6. Abdeckfolie nach einem der Ansprüche 1 bis 4, wobei das leitfähige Material nadelförmige Mikropartikel eines mit Antimon-dotierten Zinnoxids sind.

7. Abdeckfolie nach einem der Ansprüche 1 bis 6, wobei die Heißsiegelschicht (D) ferner ein leitfähiges Material umfasst.

8. Abdeckfolie nach einem der Ansprüche 1 bis 7, wobei das Abziehen zwischen der Abziehschicht (C) und der Heißsiegelschicht (D) auftritt, wenn die Abdeckfolie, die mit dem Trägerband verschweißt ist, abgezogen wird.

9. Abdeckfolie nach einem der Ansprüche 1 bis 8, wobei der spezifische Oberflächenwiederstand der Abziehschicht (C) und/oder der Heißsiegelschicht (D) 1 x 10⁴ bis 1 x 10¹² Ω beträgt.

10. Verpackung für ein elektronisches Bauteil, bei der die Abdeckfolie nach einem der Ansprüche 1 bis 9 als Abdeckmaterial für ein Trägerband, das ein thermoplastisches Harz als Hauptbestandteil aufweist, verwendet wird.

## Revendications

1. Film de couverture comprenant au moins une couche de substrat (A), une couche intermédiaire (B), une couche pelliculable (C), et une couche de thermoscellage (D) capable de thermosceller une bande de support ; dans lequel
la couche de substrat (A) est une couche comprenant un polyester à étirement biaxial ou un nylon à étirement biaxial ;
la couche intermédiaire (B) comprend, en tant que composant principal, un polyéthylène basse densité linéaire présentant une élasticité en traction de 200 MPa ou moins, polymérisé par utilisation d'un catalyseur métallocène ;
la couche intermédiaire (B) est stratifiée sur une surface de la couche de substrat (A) ; et
la couche de thermoscellage (D) est formée sur la surface de la couche pelliculable (C),
**caractérisé en ce que**
la couche pelliculable (C) comprend un matériau conducteur, et comprend, en tant que composant principal, une résine hydrogénée d'un copolymère de diène conjugué et de vinyle aromatique comportant une teneur en groupe vinyle aromatique de 15 à 35 % en masse.

2. Film de couverture selon la revendication 1, dans lequel la résine hydrogénée d'un copolymère de diène conjugué et de vinyle aromatique de la couche pelliculable (C) est une résine présentant une masse volumique de 0,890 à 0,920 x 10³ (kg/m³) et une masse moléculaire moyenne en masse de 50 000 à 150 000.

3. Film de couverture selon la revendication 1 ou 2, dans lequel la couche de thermoscellage (D) comprend une résine acrylique en tant que composant principal.

4. Film de couverture selon l'une quelconque des revendications 1 à 3, dans lequel le matériau conducteur est constitué de microparticules conductrices comprenant des microparticules qui sont aciculaires, sphériques, ou une combinaison de ces formes.

5. Film de couverture selon l'une quelconque des revendications 1 à 4, dans lequel le matériau conducteur est un nanomatériau carboné.

6. Film de couverture selon l'une quelconque des revendications 1 à 4, dans lequel le matériau conducteur est constitué de microparticules aciculaires d'oxyde d'étain dopé à l'antimoine.

7. Film de couverture selon l'une quelconque des revendications 1 à 6, dans lequel la couche de thermoscellage (D) comprend en outre un matériau conducteur.

8. Film de couverture selon l'une quelconque des revendications 1 à 7, dans lequel le pelage se produit entre la couche pelliculable (C) et la couche de thermoscellage (D) lors d'un retrait par pelage du film de couverture thermoscellé de la bande de support.

9. Film de couverture selon l'une quelconque des revendications 1 à 8, dans lequel la résistivité en surface de la couche pelliculable (C) et/ou de la couche de thermoscellage (D) est de 1 x 10⁴ à 1 x 10¹² Ω.

10. Boîtier de composant électronique utilisant le film de couverture de l'une quelconque des revendications 1 à 9 en tant que matériau de couvercle pour une bande de support comportant une résine thermoplastique en tant que composant principal.
